# EUROPEAN PATENT APPLICATION

(11) **EP 4 826 124 A1**
(43) Date of publication of application: **21.10.2026**
(21) Application number: 24903102.2
(22) Date of filing: 30.12.2024
(51) Int. Cl.: C23C 22/07, C23C 22/74, C09D 7/61, C09D 1/00

(54) **INSULATION COATING COMPOSITION FOR ELECTRICAL STEEL SHEET, ELECTRICAL STEEL SHEET, AND METHOD FOR MANUFACTURING SAME**

(30) Priority: 15.12.2023 KR 20230182753
(71) Applicant: POSCO Co., Ltd, Gyeongsangbuk-do 37859 (KR)
(72) Inventor: KIM, Hyunjong, Pohang-si, Gyeongsangbuk-do 37859 (KR)
(74) Representative: Meissner Bolte Partnerschaft mbB
(86) International application number: PCT/IB2024/063278
(87) International publication number: WO 2025/126170

(57) **Abstract**

An insulation coating composition for an electrical steel sheet according to an embodiment of the present invention comprises 100 parts by weight of a metal phosphate, 30 to 300 parts by weight of silica, 30 to 300 parts by weight of a nitrate, 30 to 300 parts by weight of feldspar, and 30 to 300 parts by weight of talc.

## Description

### [Technical Field]

An embodiment of the present invention relates to an insulation coating composition for an electrical steel sheet, an electrical steel sheet, and a manufacturing method thereof. Specifically, it relates to an insulation coating composition for an electrical steel sheet, an electrical steel sheet, and a manufacturing method thereof, in which components of the insulating coating composition are appropriately combined such that a coating does not separate even in a high-temperature and high-humidity environment, and the composition exhibits excellent effects in shielding defects of the steel sheet and imparting tension.

### [Background Art]

An electrical steel sheet is a product used as a material for transformers, motors, and electrical appliances, and unlike general carbon steel that emphasizes workability such as mechanical properties, it is a functional product that emphasizes electrical properties. Required electrical properties include low iron loss and high magnetic flux density, magnetic permeability, and space factor.

The electrical steel sheet is further classified into a grain-oriented electrical steel sheet and a non-oriented electrical steel sheet. The grain-oriented electrical steel sheet is an electrical steel sheet having excellent magnetic properties in the rolling direction by forming a Goss texture ({110}<001> texture) throughout the steel sheet using an abnormal grain growth phenomenon called secondary recrystallization. The non-oriented electrical steel sheet is an electrical steel sheet having uniform magnetic properties in all directions on a rolled sheet.

Meanwhile, the formation of an insulating coating is a process corresponding to a finishing manufacturing step of a product. In addition to electrical properties that generally suppress the occurrence of eddy current, when a plurality of sheets are laminated to form an iron core after punching into a predetermined shape, properties such as continuous punching workability to suppress wear of a mold, an anti-sticking property to prevent adhesion between iron core steel sheets after an SRA process for recovering magnetic properties by removing processing stress of the steel sheet, and surface adhesion are required. In addition to these basic properties, excellent application workability of a coating solution and solution stability that may be maintained for a long time after mixing are also required. Coating solutions used for this purpose include a chromium coating based on chromic acid and a phosphate coating based on phosphate.

These coatings have excellent corrosion resistance. However, they are vulnerable to poor weather resistance and have a disadvantage of being sticky. If the weather resistance is poor and the coating is sticky, a problem of adhesion between coating layers occurs when a wound coil is unwound. In addition, smudge patterns may occur on the surface due to defects in various steel sheets.

### [Disclosure]

### [Technical Problem]

An embodiment of the present invention provides an insulation coating composition for an electrical steel sheet, an electrical steel sheet, and a manufacturing method thereof. Specifically, the present invention provides an insulation coating composition for an electrical steel sheet, an electrical steel sheet, and a manufacturing method thereof, wherein components of the insulating coating composition are appropriately combined so that a coating does not separate even in a high-temperature and high-humidity environment, and wherein the composition exhibits excellent effects in shielding defects of the steel sheet and imparting tension.

### [Technical Solution]

An insulation coating composition for an electrical steel sheet according to an embodiment of the present invention comprises 100 parts by weight of a metal phosphate, 30 to 300 parts by weight of silica, 30 to 300 parts by weight of a nitrate, 30 to 300 parts by weight of feldspar, and 30 to 300 parts by weight of talc.

An insulation coating composition for electrical steel sheet according to an embodiment of the present invention may further include 5 to 10 parts by weight of a pigment.

The pigment may include an oxide of at least one of Mn, Fe, and Cu.

The insulation coating composition may further include 30 to 300 parts by weight of a boron compound.

The boron compound may include at least one of borax and boronic acid.

The metal phosphate may include at least one of Mg, Ca, Ba, Sr, Zn, and Al.

The nitrate may include at least one of aluminum nitrate (Al(NO₃)₃), cobalt nitrate (Co(NO₃)₂), calcium nitrate (Ca(NO₃)₂), strontium nitrate (Sr(NO₃)₂), zinc nitrate (Zn(NO₃)₂), manganese nitrate (Mn(NO₃)₂), magnesium nitrate (Mg(NO₃)₂), and silver nitrate (AgNO₃).

The nitrate may include at least two of aluminum nitrate (Al(NO₃)₃), cobalt nitrate (Co(NO₃)₂), calcium nitrate (Ca(NO₃)₂), strontium nitrate (Sr(NO₃)₂), zinc nitrate (Zn(NO₃)₂), manganese nitrate (Mn(NO₃)₂), magnesium nitrate (Mg(NO₃)₂), and silver nitrate (AgNO₃).

The silica may have a pH of 8 to 12.

An electrical steel sheet according to an embodiment of the present invention comprises an electrical steel sheet substrate and an insulating coating positioned on a surface of the electrical steel sheet substrate, and the insulating coating comprises 100 parts by weight of metal phosphate, 30 to 300 parts by weight of silica, 30 to 300 parts by weight of nitrate, 30 to 300 parts by weight of feldspar, and 30 to 300 parts by weight of talc.

A manufacturing method of an electrical steel sheet according to an embodiment of the present invention comprises: preparing an electrical steel sheet substrate; applying an insulating coating composition to a surface of the electrical steel sheet substrate; and heat treating the electrical steel sheet substrate, wherein the insulating coating composition comprises 100 parts by weight of metal phosphate, 30 to 300 parts by weight of silica, 30 to 300 parts by weight of nitrate, 30 to 300 parts by weight of feldspar, and 30 to 300 parts by weight of talc.

The heat treating step may be performed at a temperature of 700 to 1000°C for 10 to 300 seconds.

### [Advantageous Effects]

According to an embodiment of the present invention, the material exhibits excellent durability in high-temperature and high-humidity environments, possesses extreme corrosion resistance, and maintains excellent heat resistance at temperatures where workability, such as stress relief annealing (SRA), is performed.

According to an embodiment of the present invention, the present invention has the effects of shielding defects in a steel sheet and imparting tension.

### [Brief Description of the Drawings]

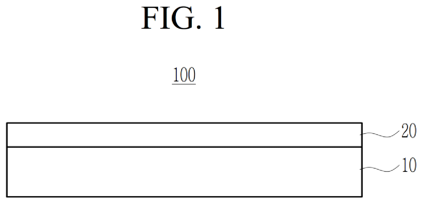

Fig. 1 is a schematic view of a cross-section of an electrical steel sheet according to an embodiment of the present invention.

### [Mode for Invention]

Terms such as first, second, and third are used to describe various parts, components, regions, layers, and/or sections, but are not limited thereto. These terms are used only to distinguish one part, component, region, layer, or section from another part, component, region, layer, or section. Therefore, a first part, component, region, layer, or section described below may be referred to as a second part, component, region, layer, or section without departing from the scope of the present invention.

The terminology used herein is for the purpose of referring to specific embodiments only and is not intended to be limiting of the present invention. As used herein, the singular forms include the plural forms as well unless the phrases clearly indicate the opposite. The meaning of "comprising" as used in the specification specifies a specific characteristic, region, integer, step, operation, element, and/or component, and does not exclude the presence or addition of other characteristics, regions, integers, steps, operations, elements, and/or components.

When a part is referred to as being "above" or "on" another part, it may be directly above or on the other part, or another part may be involved therebetween. In contrast, when a part is referred to as being "directly above" another part, no other part is interposed therebetween.

Unless otherwise defined, all terms, including technical and scientific terms, used herein have the same meaning as commonly understood by one of ordinary skill in the art to which the present invention belongs. Terms defined in commonly used dictionaries are to be interpreted as having meanings consistent with the related technical literature and the content disclosed herein, and shall not be interpreted in an ideal or overly formal sense unless explicitly defined.

Hereinafter, the embodiments of the present invention will be described in detail with reference to the accompanying drawings so that those skilled in the art may easily practice the present invention. However, the present invention may be implemented in various different forms and is not limited to the embodiments described herein.

An insulation coating composition for an electrical steel sheet according to an embodiment of the present invention comprises 100 parts by weight of a metal phosphate, 30 to 300 parts by weight of silica, 30 to 300 parts by weight of a nitrate, 30 to 300 parts by weight of feldspar, and 30 to 300 parts by weight of talc.

Hereinafter, each component will be described in detail. In an embodiment of the present invention, 'parts by weight' refers to a relative weight ratio based on 100 parts by weight of the metal phosphate, and is based on the solid content of each component. The solid content refers to the weight of each component when dried in a state free of volatile matter, such as a solvent. Specifically, it refers to the weight remaining after heat treatment, assuming a heat treatment process is performed when forming an insulating coating.

The metal phosphate serves as a binder in the insulating coating composition. If the metal phosphate is not included in an appropriate amount, the adhesion of the insulating coating may be deteriorated or sufficient tension may not be obtained. The metal phosphate may be manufactured by a process comprising adding a metal oxide to pure phosphoric acid (H₃PO₄) and reacting them. In order to improve the adhesion of the metal phosphate, a condensation reaction of the metal phosphate and boric acid may be induced by further adding boric acid during the reaction process and maintaining the mixture for 3 hours or longer, and it is also possible to use this condensation reactant instead of the metal phosphate. In an embodiment of the present invention, the metal phosphate includes not only the metal phosphate itself but also a condensation reactant of the metal phosphate and boric acid. The manufactured metal phosphate is strongly acidic.

The metal phosphate may be added to the composition using a solution having a solid content of 50 to 70 wt%. At this time, if the solid content in the solution is too small, free phosphoric acid increases in the metal phosphate, and surface moisture absorption may occur after manufacturing the metal phosphate, and if the solid content is too high, reaction failure and precipitation may occur due to an excess of solid content compared to pure phosphoric acid.

The metal phosphate and the metal oxide may include various metals without limitation. Specifically, the metal of the metal phosphate and the metal oxide may include at least one of Mg, Ca, Ba, Sr, Zn, and Al. More specifically, the metal phosphate may include at least one of monobasic magnesium phosphate (Mg(H₂PO₄)₂) and monobasic aluminum phosphate (Al(H₂PO₄)₃). More specifically, the metal phosphate may include monobasic magnesium phosphate (Mg(H₂PO₄)₂) and monobasic aluminum phosphate (Al(H₂PO₄)₃). In this case, the metal phosphate may include 10 to 90 parts by weight of monobasic aluminum phosphate and 10 to 90 parts by weight of monobasic magnesium phosphate, based on 100 parts by weight of the total solid content. If the amount of monobasic aluminum phosphate is too low, the effect of improving tension by adding monobasic aluminum phosphate may not be sufficient. If too much monobasic aluminum phosphate is added, the Al component may increase the crystallization of silica and cause cracks in the insulating coating. Specifically, the metal phosphate may include 20 to 80 parts by weight of monobasic aluminum phosphate and 20 to 80 parts by weight of monobasic magnesium phosphate, based on 100 parts by weight of the total solid content, and more specifically, 30 to 70 parts by weight of monobasic aluminum phosphate and 30 to 70 parts by weight of monobasic magnesium phosphate.

The insulation coating composition for an electrical steel sheet according to an embodiment of the present invention comprises 30 to 300 parts by weight of silica based on 100 parts by weight of the metal phosphate.

Silica is a component necessary for imparting weather resistance and corrosion resistance to a steel sheet. When the silica content is too low, it is difficult to sufficiently obtain the effect of imparting weather resistance and corrosion resistance to the steel sheet. When the silica content is too high, problems in stickiness or solution stability may occur. More specifically, the composition comprises 30 to 300 parts by weight of silica based on 100 parts by weight of the metal phosphate. More specifically, the composition may comprise 50 to 250 parts by weight of silica. More specifically, the composition may comprise 100 to 230 parts by weight of silica.

The silica may include basic and acidic types, and more specifically, may include a basic type. Including basic silica is advantageous in terms of the stability of the insulating coating composition, and the storage stability of the solution may be improved. The basic silica may have a pH of 8 to 12. The pH of the silica may be measured in a sol form.

The silica may have an average particle size in a range of 5 to 20 nm. When the average particle size of silica is too small, the condensation reaction rate is high, resulting in an agglomeration phenomenon and color deviation defects on the surface. When the average particle size is too large, the surface area per unit mass decreases, which slows down the condensation reaction rate, and defects may occur accordingly. More specifically, the silica may have an average particle size in a range of 10 to 15 nm. In an embodiment of the present invention, the particle size may be measured with a particle size analyzer, such as a Zeta Potential analyzer, and the average particle size is an arithmetic mean.

The silica may be composed of at least one nanoparticle having a different average particle size. Specifically, in order to form an insulating coating having excellent coating properties, the silica may be used by mixing at least two silica nanoparticles having different average particle sizes. An insulation coating composition for an electrical steel sheet according to an embodiment of the present invention comprises 30 to 300 parts by weight of a nitrate based on 100 parts by weight of a metal phosphate. The nitrate contributes to the improvement of corrosion resistance and weather resistance. In addition, it also serves as a dispersant that stably disperses feldspar and talc, which will be described later, in the insulation coating composition, thereby serving to secure opacity throughout the steel sheet. In particular, when used as an insulating coating for a grain-oriented electrical steel sheet, it is difficult to use an organic dispersant, and the nitrate serves as a dispersant. When the nitrate is included in an excessively small amount, it is difficult to sufficiently achieve the aforementioned role. When the nitrate is included in an excessively large amount, there is a risk of fire. More specifically, the composition may comprise 50 to 250 parts by weight of the nitrate based on 100 parts by weight of the metal phosphate. More specifically, it may comprise 100 to 200 parts by weight of the nitrate.

The nitrate may include at least one of aluminum nitrate (Al(NO₃)₃), cobalt nitrate (Co(NO₃)₂), calcium nitrate (Ca(NO₃)₂), strontium nitrate (Sr(NO₃)₂), zinc nitrate (Zn(NO₃)₂), manganese nitrate (Mn(NO₃)₂), magnesium nitrate (Mg(NO₃)₂), and silver nitrate (AgNO₃).

The nitrate may include at least two of aluminum nitrate (Al(NO₃)₃), cobalt nitrate (Co(NO₃)₂), calcium nitrate (Ca(NO₃)₂), strontium nitrate (Sr(NO₃)₂), zinc nitrate (Zn(NO₃)₂), manganese nitrate (Mn(NO₃)₂), magnesium nitrate (Mg(NO₃)₂), and silver nitrate (AgNO₃). Including two or more types of nitrates is advantageous in terms of improving weather resistance and corrosion resistance. More specifically, the nitrate may include aluminum nitrate (Al(NO₃)₃) and magnesium nitrate (Mg(NO₃)₂). In this case, each may be included in an amount of 10 to 200 parts by weight. More specifically, each may be included in an amount of 15 to 100 parts by weight.

The insulation coating composition for an electrical steel sheet according to an embodiment of the present invention comprises 30 to 300 parts by weight of feldspar based on 100 parts by weight of metal phosphate. Feldspar is a tectosilicate mineral, and more specifically, may include albite (soda feldspar) and orthoclase (potash feldspar). The feldspar serves to improve corrosion resistance in the insulation coating composition. When too little feldspar is included, it is difficult to sufficiently obtain corrosion resistance. When too much feldspar is included, the solution stability may be problematic. More specifically, the composition may comprise 50 to 250 parts by weight of feldspar. More specifically, it may comprise 100 to 230 parts by weight of feldspar.

The insulation coating composition for an electrical steel sheet according to an embodiment of the present invention comprises 30 to 300 parts by weight of talc based on 100 parts by weight of metal phosphate. Talc is a silicate mineral containing magnesium and is represented by H₂Mg₃(SiO₃)₄ or Mg₃Si₄O₁₀(OH)₂. The talc serves to improve the opacity of the insulation coating composition. When the amount of talc included is too low, it is difficult to obtain sufficient opacity and to shield defects existing in the steel sheet. When the amount of talc included is too high, the solution stability may be problematic. More specifically, 50 to 250 parts by weight may be included. More specifically, 100 to 230 parts by weight may be included.

In an embodiment of the present invention, the color may be different from that of conventional products due to the addition of feldspar and talc, and a pigment may be additionally added to compensate for this. The pigment may be added in an amount of 5 to 100 parts by weight. More specifically, the pigment may be included in an amount of 10 to 75 parts by weight. More specifically, the pigment may be included in an amount of 20 to 50 parts by weight.

The pigment is not particularly limited, but may comprise an oxide of at least one of Mn, Fe, and Cu. More specifically, the pigment may comprise an oxide of Mn, an oxide of Fe, and an oxide of Cu.

The insulation coating composition for an electrical steel sheet according to an embodiment of the present invention may further comprise 30 to 300 parts by weight of a boron compound based on 100 parts by weight of the metal phosphate. The boron compound may further improve the tension of the insulating coating by imparting porosity to the insulating coating. When the boron compound is included in an excessively small amount, it is difficult to sufficiently achieve the aforementioned role. When the boron compound is included in an excessively large amount, gelation may occur, which may cause problems in terms of solution stability. More specifically, the composition may comprise 50 to 250 parts by weight of the boron compound based on 100 parts by weight of the metal phosphate. Even more specifically, the composition may comprise 10 to 200 parts by weight of the boron compound based on 100 parts by weight of the metal phosphate.

The boron compound may include at least one of borax and boronic acid.

Borax is represented by Na₂B₄O₇ and may include borax decahydrate, borax pentahydrate, or anhydrous borax.

Boric acid is represented by H₃BO₃, and it may comprise at least one selected from the group consisting of methylboronic acid and propenylboronic acid.

In addition to the aforementioned components, the composition for forming an insulating coating may further include a solvent. The solvent serves to facilitate the application of the composition and uniformly disperse the components. The amount of the solvent is not particularly limited, but 100 to 1000 parts by weight may be included based on 100 parts by weight of the metal phosphate.

Fig. 1 shows a schematic view of a cross-section of an electrical steel sheet 100 according to an embodiment of the present invention. As shown in Fig. 1, an electrical steel sheet 100 according to an embodiment of the present invention comprises an electrical steel sheet substrate 10 and an insulating coating 20 positioned on the electrical steel sheet substrate 10.

As the electrical steel sheet substrate 10, a general non-oriented or grain-oriented electrical steel sheet may be used without limitation. In an embodiment of the present invention, since forming an insulating coating 20 of a specific component on the electrical steel sheet substrate 10 is a main configuration, a detailed description of the electrical steel sheet substrate 10 will be omitted.

Complementarily, the components of the grain-oriented electrical steel substrate are as follows.

The grain-oriented electrical steel substrate comprises 2.0 to 7.0 wt% of silicon (Si), 0.020 to 0.040 wt% of aluminum (Al), 0.01 to 0.20 wt% of manganese (Mn), 0.01 to 0.15 wt% of phosphorus (P), 0.01 wt% or less of carbon (C) (excluding 0%), 0.005 to 0.05 wt% of N, and 0.01 to 0.15 wt% of antimony (Sb), tin (Sn), or a combination thereof, with the balance being Fe and other unavoidable impurities. Since the description of each component of the grain-oriented electrical steel substrate (10) is the same as that generally known in the art, a detailed description thereof will be omitted.

A metal oxide layer (base coating layer, primary coating) formed by reacting the annealing separator with an oxidation layer of a steel sheet during a secondary recrystallization process may exist between the grain-oriented electrical steel substrate and the insulating coating. An embodiment of the metal oxide layer may be a forsterite layer. It is also possible for the grain-oriented electrical steel substrate and the insulating coating to be in direct contact by suppressing the formation of the metal oxide layer or by removing the metal oxide layer during the manufacturing process of the grain-oriented electrical steel sheet.

The thickness of the insulating coating 20 may be 0.5 to 10 µm. When the thickness of the insulating coating 20 is too thin, it is difficult to secure appropriate insulation. When the thickness of the insulating coating 20 is too thick, the stacking factor may be lowered. In an embodiment of the present invention, even if a thin insulating coating 20 is formed, appropriate insulation may be secured. More specifically, the thickness of the insulating coating 20 may be 1 to 5 µm.

The insulating coating 20 comprises 100 parts by weight of metal phosphate, 30 to 300 parts by weight of silica, 30 to 300 parts by weight of nitrate, 30 to 300 parts by weight of feldspar, and 30 to 300 parts by weight of talc. The insulating coating may be substantially the same as the solid content components of the aforementioned insulating coating composition. The insulating coating 20 may further comprise a pigment and a boron compound. In one embodiment of the present invention, the insulating coating 20 is opaque, thereby shielding Fe-mound defects and the like present on the steel sheet. In addition, the iron loss characteristics of the steel sheet may be improved by imparting tension to the steel sheet.

A manufacturing method of an electrical steel sheet according to an embodiment of the present invention comprises the steps of: preparing an electrical steel sheet substrate; applying an insulating coating composition to a surface of the electrical steel sheet substrate; and heat treating the electrical steel sheet substrate.

Since detailed contents of the electrical steel sheet substrate and the insulating coating composition have been described above, redundant descriptions will be omitted.

As an example, the electrical steel sheet substrate may be manufactured as follows.

A steel slab is prepared. In the next step, the steel slab is heated. At this time, the slab may be heated by a low-temperature slab method at 1,200°C or lower. Next, the heated steel slab is hot-rolled to manufacture a hot-rolled sheet. Thereafter, the manufactured hot-rolled sheet may be subjected to hot-rolled sheet annealing. Next, the hot-rolled sheet is cold-rolled to manufacture a cold-rolled sheet. Cold rolling may be performed once, or two or more times including intermediate annealing. Next, the cold-rolled sheet is subjected to primary recrystallization annealing. At this time, the step of performing primary recrystallization annealing on the cold-rolled sheet may include a step of simultaneously performing decarburization annealing and nitriding annealing on the cold-rolled sheet, or may include a step of performing nitriding annealing after decarburization annealing. Next, an annealing separator is applied on the surface of the recrystallization-annealed steel sheet. The application amount of the annealing separator may be 1 to 5 g/m². If the application amount of the annealing separator is too small, a coating may not be smoothly formed. If the application amount of the annealing separator is too large, secondary recrystallization may be affected. Therefore, the application amount of the annealing separator may be adjusted within the aforementioned range. Next, the steel sheet on which the annealing separator is applied is subjected to secondary recrystallization annealing. In secondary recrystallization annealing, a first soaking temperature may be 650 to 750°C, and a second soaking temperature may be 1100 to 1250°C. In the temperature rise section, the temperature may be controlled at a rate of 15°C/hr. In addition, the gas atmosphere may be maintained as an atmosphere containing 20 to 30 vol% of nitrogen and 70 to 80 vol% of hydrogen up to the first soaking step, and then maintained in a 100% hydrogen atmosphere for 15 hours in the second soaking step, followed by furnace cooling.

In the heat treating step, the heat treatment temperature may be from 700 to 1000°C. If the temperature is too low, the time required for forming the insulating coating is too long, which may deteriorate the continuous processability. If the temperature is too high, the heat resistance and blueing resistance may deteriorate due to cracks. More specifically, the heat treatment temperature may be from 750 to 950°C. The heat treatment time may be from 10 to 300 seconds. More specifically, it may be from 30 to 180 seconds.

The atmosphere during the heat treatment may be a nitrogen atmosphere.

Hereinafter, preferred Examples of the present invention, Comparative Examples in contrast thereto, and evaluation examples thereof will be described. However, the following Examples are only preferred Examples of the present invention, and the present invention is not limited to the following Examples.

### Example

A grain-oriented electrical steel sheet (300*60 mm) containing 3.1% Si by weight, having a plate thickness of 0.23 mm, and having a primary coating after finish annealing, was prepared as a test material.

An insulating coating composition was prepared by mixing components in the ratios summarized in Table 1 below. First, basic colloidal silica (average particle size 15 nm) was added to and mixed with a phosphate solution comprising 50 parts by weight of aluminum phosphate and 50 parts by weight of magnesium phosphate. Thereafter, a nitrate solution comprising equal amounts of aluminum nitrate and magnesium nitrate was added, and then feldspar, talc, anhydrous borax, and a pigment were added to finally manufacture the insulating coating composition.

The manufactured solution was applied to both surfaces of an electrical steel sheet at a coating weight of 3.1 g/m², and heat treatment was performed at 850°C for 45 seconds to form an insulating coating having a thickness of 1 µm.

Weather resistance, corrosion resistance, solution stability, coatability, opacity, and tension were evaluated by the following methods and are summarized in Table 2.

### Evaluation of weather resistance

Weather resistance was evaluated under conditions of 98% moisture, 60°C, and 72 hours, and was indicated as "OK" for a good result and "NG" for a poor result.

### Evaluation of corrosion resistance

A salt spray test was performed under conditions of 5% NaCl, 100% RH, and 65°C for 8 hours. The result was indicated as "OK" for a good result and "NG" for a poor result.

### Evaluation of solution stability

A 2x2 cm sized coated plate is dissolved in 100 ml of 10% NaOH and then filtered through a filter. The material that exists as an undissolved powder is PO₄. After measuring the weight of the powder remaining on the filter, if powder exists, it may be determined that HPO₄ has been removed by an oxidizing agent.

Cl tracking method: After dissolving a 2x2 cm size coating in 100 mL of 10% NaOH, if a Cl component is present in the solution, it may be considered that Cl was added.

### Evaluation of coatability

Visual evaluation was performed; samples with no smudge were indicated as "OK", and samples with smudges were indicated as "NG".

### Evaluation of tension

Place a specimen on a surface and mark an upper point where the specimen is curved relative to the surface. Measure a distance between the upper point and a position of the specimen before bending, and record the distance as a length of the maximum curved portion (H). Then, perform a measurement as follows: if a value of the tension is 8x10⁻⁶ or more, the specimen is indicated as "OK", and if the value is less than 8x10-6, the specimen is indicated as "NG". $σ = E / \left(1-v\right) x {T}^{2} / 3 t x 2 H / {I}^{2}$
σ = film tension (Kg/mm)
v = Poisson's ratio (0.3)
t = thickness after coating removal (mm)
T = thickness before coating removal (mm)
H = length of the maximum bent portion (mm)
I = specimen length(mm)
Evaluation of opacity

Measurements were performed using an Opacity-Shade Reflectometer, wherein a measurement of 35 or greater was indicated as "OK", and a measurement of less than 35 was indicated as "NG".

**[Table 1]**

| (Parts by weight) | Phosphate | Silica | Nitrate | Feldspar | Talc | FeO | MnO | CuO | Borax |
|---|---|---|---|---|---|---|---|---|---|
| 1 | 100 | 200 | 150 | 200 | 100 | 10 | 10 | 10 | 150 |
| 2 | 100 | 20 | 150 | 200 | 100 | 10 | 10 | 10 | 150 |
| 3 | 100 | 400 | 150 | 200 | 100 | 10 | 10 | 10 | 150 |
| 4 | 100 | 200 | 10 | 200 | 100 | 10 | 10 | 10 | 150 |
| 5 | 100 | 200 | 400 | 200 | 100 | 10 | 10 | 10 | 150 |
| 6 | 100 | 200 | 150 | 10 | 100 | 10 | 10 | 10 | 150 |
| 7 | 100 | 200 | 150 | 400 | 100 | 10 | 10 | 10 | 150 |
| 8 | 100 | 200 | 150 | 200 | 10 | 10 | 10 | 10 | 150 |
| 9 | 100 | 200 | 150 | 200 | 400 | 10 | 10 | 10 | 150 |
| 10 | 100 | 200 | 150 | 200 | 100 | 10 | 10 | 10 | 10 |
| 11 | 100 | 200 | 150 | 200 | 100 | 10 | 10 | 10 | 400 |
| 12 | 100 | 200 | 150 | 200 | 100 | 1 | 1 | 1 | 150 |
| 13 | 100 | 200 | 150 | 200 | 100 | 50 | 50 | 50 | 150 |

**[Table 2]**

| | Weather resistance | Corrosion resistance | Solution stability | Coatability | Opacity | Tension (MPa) | Remarks |
|---|---|---|---|---|---|---|---|
| 1 | OK | OK | OK | OK | 50 | 5 | Example |
| 2 | NG | NG | OK | OK | 50 | 5 | Comparative Example |
| 3 | OK | OK | NG | NG | 50 | 5 | Comparative Example |
| 4 | NG | NG | OK | OK | 10 | 5 | Comparative Example |
| 5 | OK | OK | NG | NG | 50 | 5 | Comparative Example |
| 6 | OK | NG | OK | OK | 50 | 5 | Comparative Example |
| 7 | OK | OK | NG | NG | 50 | 5 | Comparative Example |
| 8 | OK | OK | OK | OK | 10 | 5 | Comparative Example |
| 9 | OK | OK | NG | NG | 50 | 5 | Comparative Example |
| 10 | OK | OK | OK | OK | 50 | 2 | Comparative Example |
| 11 | OK | OK | NG | NG | 50 | 5 | Comparative Example |
| 12 | OK | OK | OK | OK | 10 | 5 | Comparative Example |
| 13 | OK | OK | NG | NG | 50 | 5 | Comparative Example |

As shown in Table 1 and Table 2, it may be confirmed that weather resistance, corrosion resistance, solution stability, coatability, opacity, and tension are simultaneously excellent when the components of the insulating coating composition are included in an appropriate amount. On the other hand, it may be confirmed that some characteristics are inferior when the components of the insulating coating composition are not included in an appropriate amount.

The present invention is not limited to the above Examples, but may be manufactured in various different forms, and those of ordinary skill in the art to which the present invention pertains will understand that the present invention may be practiced in other specific forms without departing from the technical idea or essential features of the present invention. Therefore, it should be understood that the Examples described above are illustrative in all respects and not restrictive.

### [Description of Reference Numerals]

| | | | |
|---|---|---|---|
| 100: | electrical steel sheet | 10: | electrical steel sheet substrate |
| 20 : | insulating coating | | |

## Claims

1. An insulation coating composition for an electrical steel sheet comprising:
100 parts by weight of a metal phosphate,
30 to 300 parts by weight of silica,
30 to 300 parts by weight of a nitrate,
30 to 300 parts by weight of feldspar, and
30 to 300 parts by weight of talc.

2. The insulation coating composition of claim 1,
further comprising 5 to 100 parts by weight of a pigment.

3. The insulation coating composition of claim 2,
wherein the pigment comprises an oxide of at least one of Mn, Fe, and Cu.

4. The insulation coating composition of claim 1,
further comprising 30 to 300 parts by weight of a boron compound.

5. The insulation coating composition of claim 4,
wherein the boron compound comprises at least one of borax and boronic acid.

6. The insulation coating composition of claim 1,
wherein the metal phosphate comprises at least one of Mg, Ca, Ba, Sr, Zn, and Al.

7. The insulation coating composition of claim 1,
wherein the nitrate comprises at least one of aluminum nitrate, cobalt nitrate, calcium nitrate, strontium nitrate, zinc nitrate, manganese nitrate, magnesium nitrate, and silver nitrate.

8. The insulation coating composition of claim 1,
wherein the nitrate comprises at least two of aluminum nitrate, cobalt nitrate, calcium nitrate, strontium nitrate, zinc nitrate, manganese nitrate, magnesium nitrate, and silver nitrate.

9. The insulation coating composition of claim 1,
wherein silica has a pH of 8 to 12

10. An electrical steel sheet comprising an electrical steel sheet substrate and
an insulating coating positioned on a surface of the electrical steel sheet substrate,
wherein the insulating coating comprises 100 parts by weight of metal phosphate, 30 to 300 parts by weight of silica, 30 to 300 parts by weight of a nitrate, 30 to 300 parts by weight of feldspar, and 30 to 300 parts by weight of talc.

11. A method for manufacturing an electrical steel sheet comprising the steps of:
preparing an electrical steel sheet substrate;
applying an insulating coating composition to a surface of the electrical steel sheet substrate; and
heat treating the electrical steel sheet substrate,
wherein the insulating coating composition comprises 100 parts by weight of a metal phosphate, 30 to 300 parts by weight of silica, 30 to 300 parts by weight of a nitrate, 30 to 300 parts by weight of feldspar, and 30 to 300 parts by weight of talc.

12. The method for manufacturing an electrical steel sheet of claim 11,
wherein the heat treating step is performed at a temperature of 700 to 1000°C for 10 seconds to 300 seconds.
